# NEUE EUROPÄISCHE PATENTSCHRIFT

(11) **EP 2 247 853 B2**
(45) Veröffentlichungstag und Bekanntmachung des Hinweises auf die Entscheidung über den Einspruch: **27.09.2017**
(45) Hinweis auf die Patenterteilung: 22.02.2012
(21) Anmeldenummer: 09706104.8
(22) Anmeldetag: 28.01.2009
(51) Int. Cl.: F03D 13/20

(54) **WINDENERGIEANLAGETURM ODER EIN SEGMENT DES WINDENERGIEANLAGETURMS MIT EINER TÜR UMFASSEND EINE TÜRZARGE**
WIND TURBINE TOWER OR A SEGMENT OF A WIND TURBINE TOWER WITH A DOOR HAVING A DOOR FRAME
TOUR D'ÉOLIENNE OU SEGMENT DEDIT TOUR D'ÉOLIENNE AVEC UNE PORTE AYANT UN CADRE DE PORTE

(30) Priorität: 30.01.2008 DE 102008006766; 05.03.2008 DE 102008012664; 14.08.2008 DE 102008037768
(43) Veröffentlichungstag der Anmeldung: 10.11.2010
(73) Patentinhaber: Senvion GmbH, 22297 Hamburg (DE)
(72) Erfinder: GAWRISCH, Rüdiger, 24790 Schacht-Audorf (DE); KLUGMANN, Roberto, 24220 Flintbek (DE)
(74) Vertreter: Groth, Wieland
(86) Internationale Anmeldenummer: PCT/DE2009/000099
(87) Internationale Veröffentlichungsnummer: WO 2009/094991

(56) Entgegenhaltungen:
- EP-A1- 0 490 169
- EP-A1- 1 640 055
- WO-A1-2006/050723
- WO-A1-2007/108731
- DE-A1- 3 504 840
- DE-A1-102004 061 391
- DE-U1-202006 003 628
- JP-A- 10 325 235
- JP-A- 11 325 580

## Beschreibung

Die Erfindung betrifft einen Turm oder ein Turmsegment einer Windenergieanlage mit einer Tür zum Betreten des Turminneren, umfassend eine Türzarge, die eine vorzugsweise mit einem Türblatt zu schließende Türöffnung aufweist.

Des Weiteren betrifft die Erfindung eine Türzarge für eine Tür eines Turmes einer Windenergieanlage, die eine vorzugsweise mit einem Türblatt zu schließende Türöffnung aufweist und eine Windenergieanlage mit einem Turm, mit einer zum Betreten des Turminneren vorgesehenen Tür und mit einer zu der Tür führenden Treppe an der Außenseite des Turms, vorzugsweise eines eingangs genannten Turms.

Aus der DE 35 04 840 A1 ist ein Stahlrohrmast mit einer Öffnung zur Montage und Wartung von Kabelanschlüssen offenbart. In den Innenraum des Mastes ist eine Versteifungsvorrichtung eingesetzt.

Aus der DE 90 2004 061 391 A1 ist eine Windenergieanlage mit einer Temperaturregelung bekannt, in der Belüftungsluft über eine Leitung am Turmboden in den Innenraum geführt wird, die dann im oberen Bereich des Turmes wieder austritt.

Heutige Windenergieanlagen verfügen zumeist über einen geschlossenen Turm, der häufig aus vorgefertigten Turmsegmenten aufgebaut wird, der durch eine Tür betreten werden kann und in dem ein Aufstieg bis zu einer so genannten Gondel auf dem Turmkopf, eventuell mit einem Aufzug, möglich ist. In diesem Turm sind auch elektrische bzw. elektrotechnische Einrichtungen, zum Beispiel ein Umrichter und/oder ein Transformator, untergebracht, die sich zum Teil selbst erheblich aufheizen und deshalb temperiert, insbesondere gekühlt, werden müssen, um Beschädigungen zu vermeiden. Hierfür kommen grundsätzlich geschlossene Kühlkreisläufe, insbesondere mit Wasserkühlung in Betracht, jedoch bergen diese die Gefahr von Leckagen und sind wartungsaufwendig. Eine einfachere Luftkühlung des Turminneren oder von ausgesuchten Bereichen davon mit vorzugsweise gefilterter Luft ist daher empfehlenswerter. Hierfür muss Luft an mindestens einer geeigneten Stelle in den Turm eintreten können und an dieser oder einer anderen Stelle in gleicher Menge wieder austreten können.

Der Erfindung liegt daher die Aufgabe zugrunde, an wenigstens einer günstigen Stelle eine Luftdurchtrütsöffnung vorzusehen.

Diese Aufgabe wird erfindungsgemäß dadurch gelöst, dass die Türzarge wenigstens eine Luftdurchtrittsöffnung, insbesondere Lufteintrittsöffnung, aufweist.

Diese Lösung hat unter anderem die Vorteile, dass die Luftdurchtrittsöffnung fertigungstechnisch leicht ausgebildet werden kann, dass die Statik des Turms hierdurch nicht beeinträchtigt wird und dass sie in einem Bereich angeordnet ist, in dem sich räumlich nahe üblicherweise eine zu temperierende Einrichtung im Turm befindet Die Luft kann daher einfach und kostengünstig der zu temperierenden Einrichtung bereitgestellt bzw. zugeführt, vorzugsweise zum Beispiel mit relativ kurzen Rohren oder Schläuchen, zugeleitet werden,

Die Luftdurchtrittsöffnung wird erfindungsgemäß besonders günstig bereitgestellt, wenn sie, wie nach einer Weiterbildung der Erfindung vorgesehen, unterhalb der Türöffnung angeordnet ist

Die Türzarge weist vorzugsweise eine im Wesentlichen etwa ovale Außenkontur auf, um mit dieser besonders stabilen Formgebung die Statik des Turms trotz dieses Durchbruchs der Turmwandung nicht zu beeinträchtigen. Wird die Türöffnung, wie nach einer anderen Weiterbildung der Erfindung vorgesehen, im Wesentlichen etwa rechteckig ausgebildet und vielleicht die ovale Außenform etwas großzügiger bemessen, ist insbesondere oberhalb und unterhalb der Türöffnung genügend Platz für eine erfindungsgemäße Luftdurchtrittsöffnung Innerhalb der Türzarge.

Vorzugsweise ist die Luftdurchtrittsöffnung mit einem Wetterschutz versehen, beispielsweise mit Regen abschirmenden Lamellen.

Nach einer bevorzugten Weiterbildung der Erfindung ist in der Turmwandung wenigstens eine Luftaustrittsöffnung vorgesehen, vorzugsweise auf der der Lufteintrittsöffnung abgewandten Seite des Turms und bevorzugt etwas höher als diese, wobei insbesondere auch die Luftaustrittsöffnung mit einem Wetterschutz versehen sein kann.

Eine nächste Weiterbildung der Erfindung sieht vor, dass zum Austritt von Luft wenigstens eine Absaugeinrichtung vorgesehen ist. Hierbei kann es sich im Wesentlichen um einen Ventilator, bevorzugt in einem Lüftungskanal, handeln.

Bei einem Turm, mit einer zum Betreten des Turminneren vorgesehenen Tür und mit einer zu der Tür führenden Treppe an der Außenseite des Turms ist nach einer anderen Weiterbildung der Erfindung, für die auch selbständiger Schutz beansprucht wird, mit Vorteil vorgesehen, dass wenigstens eine Einrichtung zur Filterung von Luft unter der Treppe angeordnet ist. Eine Filteranlage ist zur Filterung der in das Turminnere eintretenden Luft sachdienlich und die erfindungsgemäße Unterbringung einer Filtereinrichtung bietet der Filtereinrichtung Schutz und macht diese zugleich bequem zugänglich.

Insbesondere kann die erfindungsgemäß platzierte Filtereinrichtung besonders günstig einer unterhalb der Türöffnung angeordneten Luftdurchtrittsöffnung vorgeschaltet sein. Dabei kann beispielsweise der durch die Filtereinrichtung und die Luftdurchtrittsöffnung gebildete Luftweg wenigstens einer elektrischen Einrichtung, vorzugsweise einem Umrichter und/oder einem Transformator, zur Temperierung, insbesondere Kühlung, zugeordnet sein.

Eine andere Weiterbildung der Erfindung sieht vor, dass zur Temperierung einer, vorzugsweise oberhalb des Türniveaus im Turminneren anzuordnenden, zu temperierenden Einrichtung die Türzarge wenigstens eine Luftdurchtrittsöffnung oberhalb der Türöffnung aufweist. Dann könnte beispielsweise der oberhalb der Türöffnung angeordneten Luftdurchtrittsöffnung wenigstens eine Filtereinrichtung im Turminneren nachgeschaltet sein. Die Filtereinrichtung kann aber auch außerhalb des Turmes angeordnet und der Luftdurchtrittsöffnung vorgeschaltet sein.

Für die (Jeweilige) Filtereinrichtung ist vorzugsweise ein Filtergehäuse zur Verkraftung, insbesondere Aufnahme, einer Partikelbelastung, insbesondere Sand- und Staubbelastung, vorgesehen. Insbesondere kann dann das Filtergehäuse eine unterseitige Partikelentnahme aufweisen, mit der die Filtereinrichtung leicht gereinigt und entlastet werden kann. Bevorzugt weist die Filtereinrichtung wenigstens eine auswechselbare Filterkassette auf, wobei z. B. die Filterkassette wenigstens ein Zick-Zack-Filter enthalten könnte.

Für eine Türzarge für eine Tür eines Turmes einer Windenergieanlage, die eine vorzugsweise mit einem Türblatt zu schließende Türöffnung aufweist und die sich in selbständiger Lösung der gestellten Aufgabe auszeichnet durch wenigstens eine Luftdurchtrittsöffnung, wird auch selbständiger Schutz beansprucht Die sich hieraus ergebenden Vorteile sind schon im Zusammenhang mit dem erfindungsgemäßen Turm geschildert worden.

Bevorzugt ist die Luftdurchtrittsöffnung aus den bereits weiter oben erwähnten Gründen erfindungsgemäß unterhalb der Türöffnung angeordnet. Insbesondere kann die Türzarge aus statischen Gründen eine im Wesentlichen etwa ovale Außenkontur aufweisen und die Türöffnung im Wesentlichen etwa rechteckig sein, so dass zwischen der Kontur der Türöffnung und der ovalen Außenkontur, vor allem oberhalb und unterhalb der Türöffnung, ausreichend Platz für erfindungsgemäße Luftdurchtrittsöffnungen vorhanden ist.

Die Luftdurchtrittsöffnung kann mit einem zum Beispiel Lamellen aufweisenden Wetterschutz versehen sein.

Auch für eine Windenergieanlage mit einem Turm, mit einer zum Betreten des Turminneren vorgesehenen Tür und vorzugsweise mit einer zu der Tür führenden Treppe an der Außenseite des Turms, die sich erfindungsgemäß dadurch auszeichnet, dass wenigstens eine Einrichtung zur Filterung von Luft unter der Treppe angeordnet ist, wird selbständiger Schutz beansprucht. Auch die hieraus sich ergebenden Vorteile sind bereits im Vorhergehenden geschildert worden.

Insbesondere kann, wie bereits erwähnt, die Filtereinrichtung einer unterhalb der Türöffnung angeordneten Luftdurchtrittsöffnung vorgeschaltet sein, wobei der durch die Filtereinrichtung und die Luftdurchtrittsöffnung gebildete Luftweg zum Beispiel wenigstens einer elektrischen Einrichtung, vorzugsweise einem Umrichter und/oder einem Transformator, zur Temperierung, insbesondere Kühlung, zugeordnet sein könnte.

Zur Temperierung einer, vorzugsweise oberhalb des Türniveaus im Turminneren anzuordnenden, zu temperierenden Einrichtung könnte die Türzarge wenigstens eine Luftdurchtrittsöffnung oberhalb der Türöffnung aufweisen. Zum Beispiel könnte ein Umrichter oberhalb eines Transformators im Turminneren angeordnet sein. Es könnten aber zum Beispiel auch ein Umrichter und ein Transformator unten im Turm untergebracht sein, oder es könnte ein Umrichter unten im Turm untergebracht sein und ein Transformator könnte in einem gesonderten Transformatorhäuschen außerhalb des Turms angeordnet sein. Je nach Unterbringungen und Anordnungen, könnte erfindungsgemäß der Türbereich des Turms in einfacher, kostengünstiger und effizienter Weise mit wenigstens einer geeigneten Luftdurchtrittsöffnung versehen sein.

Einer oberhalb der Türöffnung angeordneten Luftdurchtrittsöffnung könnte wenigstens eine Filtereinrichtung innerhalb des Turms nachgeschaltet sein. Die Filtereinrichtung kann alternativ außerhalb des Turmes angeordnet und der Luftdurchtrittsöffnung vorgeschaltet sein.

Eine (jeweilige) Filtereinrichtung ist vorzugsweise mit einem Filtergehäuse zur Verkraftung, insbesondere Aufnahme, einer Partikelbelastung, insbesondere Sand- und Staubbelastung, ausgerüstet.

Insbesondere kann das Filtergehäuse eine unterseitige Partikelentnahme aufweisen, über die das Filtergehäuse in einfacher und bequemer Weise entlastet und gereinigt werden kann. Vorzugsweise umfasst die Filtereinrichtung wenigstens eine auswechselbare Filterkassette.

Ausführungsbeispiele, aus denen sich auch weitere erfinderische Merkmale ergeben können, auf die die Erfindung in ihrem Umfange aber nicht beschränkt ist, sind in der Zeichnung dargestellt. Es zeigen schematisch:
- Fig. 1: eine Ansicht einer erfindungsgemäßen Türzarge mit Luftdurchtrittsöffnungen,
- Fig. 2: ein erstes erfindungsgemäßes Ausführungsbeispiel einer Turmbelüftung in einem schematischen Schnitt durch einen Turmfuß,
- Fig. 3: ein zweites erfindungsgemäßes Ausführungsbeispiel einer Turmbelüftung in einem schematischen Schnitt durch einen Turmfuß,
- Fig. 4: einen Detailausschnitt aus Fig. 2 in einem Treppenbereich des Turmfußes,
- Fig. 5: ein drittes erfindungsgemäßes Ausführungsbeispiel einer Turmbelüftung in einer schematischen perspektivischen Ansicht eines Turmfußes,
- Fig. 5a: ein viertes erfindungsgemäßes Ausführungsbeispiel einer Turmbelüftung in einer schematischen perspektivischen Ansicht eines Turmfußes,
- Fig. 6: Schnittansicht eines Abluftkastens entlang der Linie VI-VI in Fig. 5,
- Fig. 7: eine perspektivische Ansicht eines erfindungsgemäßen Turmsegmentes,
- Fig. 8: eine seitliche Ansicht eines Hebezeugs,
- Fig. 9: eine Schnittansicht entlang der Linie IX-IX in Fig. 8,
- Fig. 10: eine Lastbrücke zum Ausbringen eines Bauteils aus dem Turmsegment,

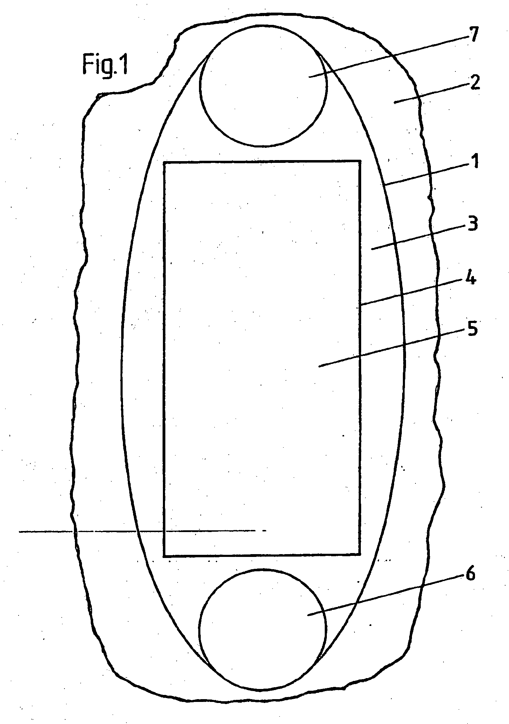

Fig. 1 zeigt den Bereich einer Tür in einem Ausschnitt einer Wandung eines Turmes 2 einer Windenergieanlage. Der Bereich 1 der Tür bzw. der Türzarge 3 hat im dargestellten Ausführungsbeispiel aus statischen Gründen eine im Wesentlichen ovale Kontur. Eine von der Türzarge 3 umrahmte Türöffnung 4, die mit einem Türblatt 5 verschlossen ist, hat in diesem Ausführungsbeispiel eine rechteckige Form. Hierdurch ist erfindungsgemäß insbesondere oberhalb und unterhalb der Türöffnung 4 in der Türzarge 3 genügend Raum für Luftdurchtrittsöffnungen 6, 7 vorhanden, um den Turm zu belüften, insbesondere darin untergebrachte Einrichtungen mit Luft zu kühlen. Die Luftdurchtrittsöffnungen 6, 7 könnten zum Beispiel, wie in dem gewählten Ausführungsbeispiel, kreisrund ausgeführt sein und einen Durchmesser von beispielsweise etwa 450 mm haben. Eine rechteckig ausgebildete Türöffnung 4 ermöglicht vorteilhefterweise den Einsatz einer Standardtür.

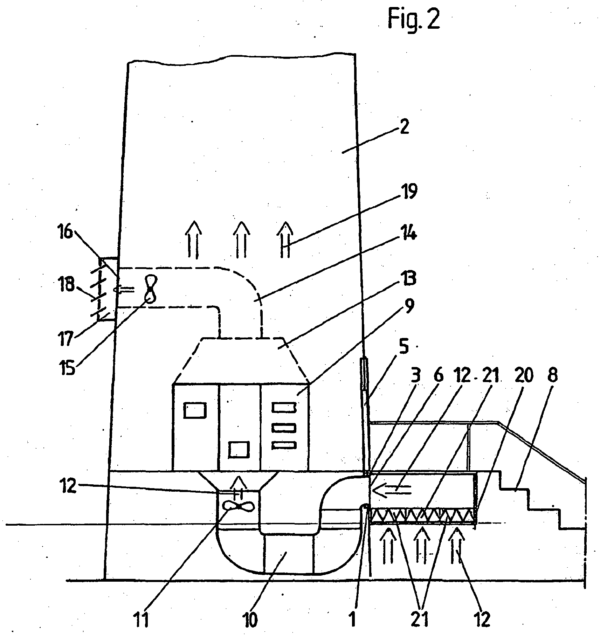

Fig. 2 zeigt einen schematischen Schnitt durch den Fuß eines Turmes 2 einer Windenergieanlage. Der Turm 2 weist eine Tür mit einem Türblatt 5 gemäß Fig. 1 auf. Innerhalb der Außenkontur 1 einer Türzarge 3 befindet sich in der Türzarge 3 eine Luftdurchtrittsöffnung 6 unterhalb des Türblatts 5. Diese Durchtrittsöffnung 6 befindet sich zudem unterhalb und im Schutz einer Treppe 8, die zur Tür des Turms 2 führt. Im Inneren des Turms 2 im Bereich seines Fußes befindet sich eine elektrische Einrichtung 9, die zu temperieren, insbesondere zu kühlen ist, wozu bei einer erfindungsgemäßen Luftkühlung ein ausreichender Luftdurchfluss und Luftaustausch gewährleistet ist. Dazu ist bei diesem Ausführungsbeispiel die Luftdurchtrittsöffnung 6 über einen Luftkanal 10, zum Beispiel einen Schlauch, mit der elektrischen Einrichtung 9 Luft leitend verbunden. Zusätzlich ist bevorzugt in dem Luftkanal 10 ein Ventilator 11 eingesetzt, der die Luft in Richtung von Pfeilen 12 durch die Luftaustrittsöffnung 6 ansaugt und der elektrischen Einrichtung 9 zuführt. Optional kann die Luft nach der elektrischen Einrichtung 9 von einer Haube 13 aufgefangen werden und über einen weiteren Luftkanal 14 und mit einem weiteren Ventilator 15 durch eine Luftaustrittsöffnung 16 aus dem Turm 2 nach außen abgegeben werden. Die Luftaustrittsöffnung 16 ist bevorzugt an der der Luftdurchtrittsöffnung 6 abgewandten Seite des Turms 2 angeordnet. An der Luftaustrittsöffnung 16 ist in der Zeichnung auch beispielhaft ein Wetterschutz 17 mit Lamellen 18 angedeutet. Alternativ könnte für einen Luftabzug in Richtung von Pfeilen 19 aber auch einfach der Kamineffekt des Turms 2 selbst genutzt werden, der aber nicht ausgeprägt genug sein könnte. Theoretisch könnte ein Luftaustausch, also ein Eintreten und ein Austreten von Luft, durch die Luftdurchtrittsöffnung allein stattfinden, jedoch wäre auch ein solcher Luftaustausch, insbesondere bei hoher Außentemperatur, eventuell nicht ausgeprägt und sicher genug. Eine Lösung wie in der Fig. 2 wird daher bevorzugt. Bei niedrigen Außentemperaturen könnte eventuell auf einen Lüfter aus Kostengründen verzichtet werden.

Bei der elektrischen Einrichtung 9 kann es sich zum Beispiel um einen-Umrichter handeln. Es könnte an dieser Stelle aber zum Beispiel auch ein Transformator aufgestellt sein, während sich ein Umrichter am Turmkopf in der Gondel der Windenergieanlage befinden könnte. Ein Transformator könnte zum Beispiel auch außerhalb des Turms 2 aufgestellt werden und zum Beispiel in einem eigenen Transformatorhäuschen gekühlt werden.

In der Fig. 2 ist zudem eine Filtereinrichtung 20 erkennbar. Diese Filtereinrichtung 20 ist unterhalb der Treppe 8 in einem geschützten und zugleich leicht zugänglichen Bereich angeordnet. Sie kann beispielsweise aus drei plattenartig nebeneinander gelegten Filterkassetten 21 bestehen, die leicht entnehmbar, auswechselbar und reinigbar sind. Innerhalb einer jeden Filterkassette 21 kann zum Beispiel ein zick-zack-förmig gefaltetes Filtermaterial eingelegt sein. Die Anordnung der Filtereinrichtung 20 mit nach unten, zum Erdboden weisender Ansaugöffnung bietet den Vorteil, dass in der Filtereinrichtung 20 gefangene Partikel nach Abschaltung des Ventilators 11 wenigstens teilweise selbsttätig durch Schwerkraft und ggf. Vibration aus der Filtereinrichtung 20 nach unten herausfallen. Die Filtereinrichtung 20 ist somit selbstreinigend.

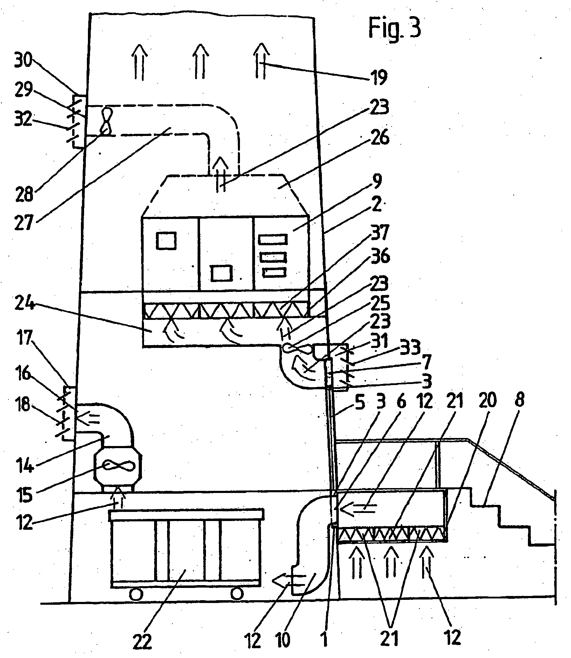

Fig. 3 zeigt ein zweites Ausführungsbeispiel eines belüfteten Turmfußes. Gleiche Bauelemente sind mit den gleichen Bezugszahlen bezeichnet wie In Fig. 2.

Im Unterschied zum Ausführungsbeispiel gemäß Fig. 2 ist jetzt die elektrische Einrichtung 9, zum Beispiel ein Umrichter, weiter oben im Turm 2 angeordnet, während ganz unten im Turm 2 eine weitere elektrische Einrichtung 22, zum Beispiel ein Transformator, angeordnet ist Deshalb wird jetzt die elektrische Einrichtung 22 mit einem Luftstrom 12, der von der unterhalb des Türblattes 5 angeordneten Luftdurchtrittsöffnung 6 bis zur Luftaustrittsöffnung 16 strömt, gekühlt. Der Luftstrom wird hierbei bevorzugt durch einen Ventilator 15 befördert, der abweichend von der in Fig. 3 dargestellten Position unmittelbar auf dem Transformator bzw. der elektrischen Einrichtung 22 angeordnet sein kann. Eine solche Anordnung erteichter die Montage.

Die höher angeordnete Einrichtung 9 wird durch einen weiteren Luftstrom 23 gekühlt. Dazu ist eine weitere Luftdurchtrittsöffnung 7 oberhalb des Türblattes 5 in der Türzarge 3 angeordnet. Von dieser oberen Luftdurchtrittsöffnung 7 führt ein Lüftungskanal 24 mit einem Ventilator 25 zur elektrischen Einrichtung 9. Über dieser Einrichtung 9 befindet sich optional eine Haube 26 mit einem Lüftungskanal 27 mit einem Ventilator 28, der zu einer weiteren Luftaustrittsöffnung 29 führt Auch die Luftaustrittsöffnung 29 und die obere Luftdurchtrittsöffnung 7 haben jeweils einen Wetterschutz 30, 31 mit Lamellen 32, 33. Auch in diesen geschilderten Luftweg kann vor der elektrischen Einrichtung 9 eine Filtereinrichtung 36 mit Filterkassetten 37 eingebracht werden, wobei sich dieser Filter innerhalb des Turms 2 befindet

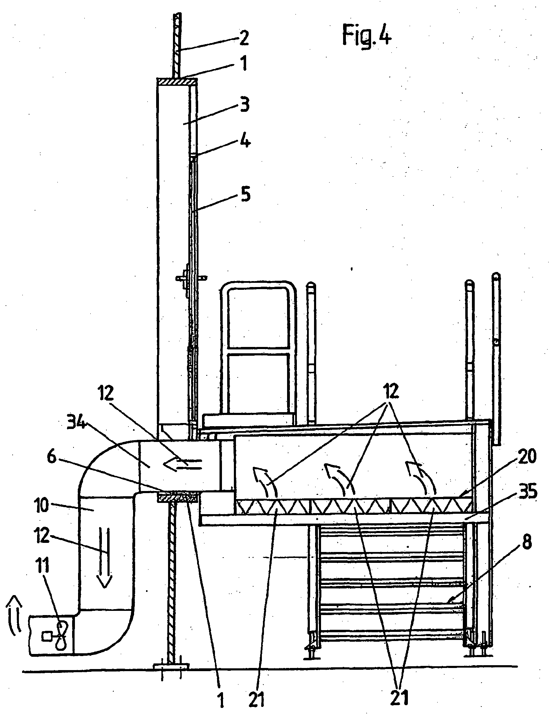

Fig. 4 zeigt einen Detailausschnitt aus Fig. 2 in einem Treppenbereich des Turmfußes, allerdings mit einer etwas anders gestalteten Treppe 8. Gleiche Bauelemente sind wieder mit den gleichen Bezugszahlen bezeichnet wie in den vorhergehenden Figuren.

In dieser Fig. 4 ist insbesondere die Ausbildung der Tür im Schnitt und die Ausbildung und Anordnung der Filterkassetten 21 noch einmal genauer zu erkennen.

In die Luftdurchtrittsöffnung 6 ist hier ein Luftführungsstutzen 34 eingeführt.

Im Bereich 35 unterhalb der Filterkassetten 21 könnte eine zum Beispiel entnehmbare oder aufklappbare Auffangwanne für Staub und ähnliche Partikel vorgesehen sein. Ein Klappmechanismus trägt dabei beim Aufklappen das Gewicht von Filterkassetten 21 und Auffangwanne. Ein unkontrolliertes nach unten Fallen von Filterkassetten 21 und Auffangwanne ist durch den Klappmechanismus verhinderbar.

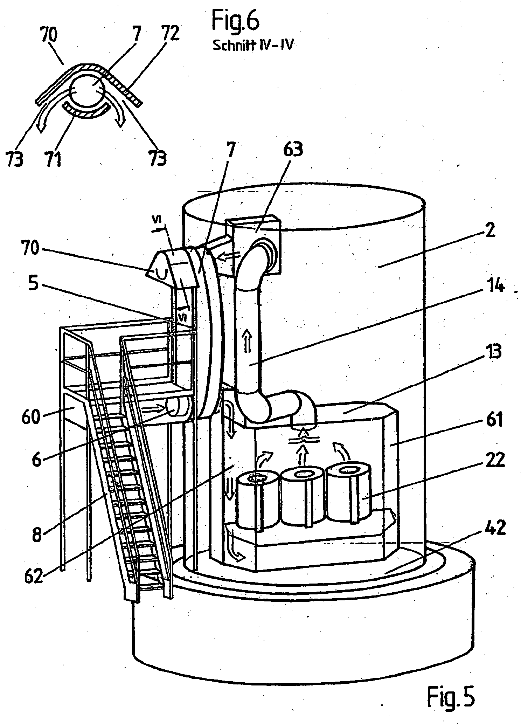

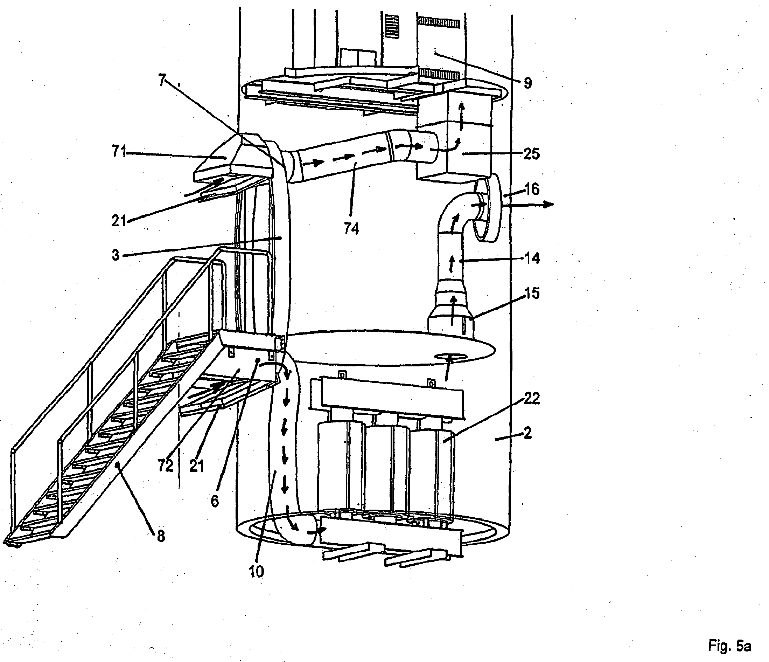

Fig. 5 zeigt den Turm 2 mit durchsichtigen Außenwänden. In der Türzarge 3 ist auch in dieser Ausführungsform der Erfindung genügend Raum für die Luftdurchtrittsöffnungen 6, 7 vorhanden, um den Innenraum des Turmes 2 zu belüften. Die erfindungsgemäße Turmbelüftung dient der Kühlung der im Fuß des Turmes 2 vorgesehenen elektrischen Einrichtungen 9 wie beispielsweise dem Transformator 22. Die unterhalb des Türblattes 5 befindliche Luftdurchtrittsöffnung 6 ist unterhalb des Podestes der Treppe 8 angeordnet. In Luftstromrichtung, die durch Pfeile gekennzeichnet ist, vor der Durchtrittsöffnung 6 ist außenseitig des Turmes 2 ein Filterkasten 60 bodenseitig des Podestes montiert. Der Filterkasten 60 reinigt von außen angesaugte kühlere Luft vor dem Durchtritt durch die Durchtrittsöffnung 6 von Schwebepartikeln, Staub und Ähnlichem.

Der Transformator 22 ist in einem Luft führenden Transformatorgehäuse 61 untergebracht und etwas über dem Boden des Fußes des Turmes 2 angeordnet. Die durch die Durchtrittsöffnung 6 angesaugte Luft kann durch einen Luftkanal 62 des Luft führenden Transformatorgehäuses 61 unter den Transformator 22 geführt werden. Von dort strömt sie in den Innenraum des Transformatorgehäuses 61 an dem Transformator 22 vorbei und nimmt dessen Wärme zumindest zum Teil auf. Die durch die Wärmeaufnahme erwärmte Luft steigt beschleunigt im Transformatorgehäuse 61 auf. Im oberen Bereich des Transformatorgehäuses 61 wird die erwärmte Luft von einer Haube 13 aufgefangen und durch den weiteren Luftkanal 14 zu einem turminnenseitig neben der Durchtrittsöffnung 7 Lüfter 63 geleitet. Der Lüfter 63 bläst die erwärmte Luft aus der oberhalb des Türblattes 5 befindlichen Luftdurchtrittsöffnung 7 wieder aus dem Innenraum des Turmes 2 hinaus ins Freie. Der Lüfter 63 kann, in Abweichung zur Darstellung in Fig 5, zur Vereinfachung seiner Montage auch unmittelbar auf einer Oberseite der Haube 13 angeordnet sein.

Außenseitig an der Luftdurchtrittsöffnung 7 ist ein Abluftkasten 70 gemäß Fig. 6 vorgesehen. Der Abluftkasten 70 ist an seiner nach außen weisenden Stirnseite geschlossen und wird bodenseitig und bodenabseitig von zwei unterschiedlich langen und gebogenen Streifen 71, 72 begrenzt, zwischen denen zwei parallel zum Boden verlaufende Luftdurchtrittsspalte 73 frei bleiben. Die Luftdurchtrittsspalte 73 sind von dem längeren bodenabseitigen Streifen 72 überdeckt und so vor Regeneinfall geschützt. Vorteilhafterweise kann auch im Innern des Abluftkastens 70 ein Luftleitblech zur Aufteilung der Strömung auf die beiden Luftdurchtrittsspalte 73 vorgesehen sein.

In Fig. 5a sind die beiden Luftdurchtrittsöffnungen 6, 7 durch zum einen die Türzarge 3 und zum anderen durch die zwei außerhalb des Turmes angeordneten Filterkästen 71, 72 verdeckt Der obere Filterkasten 71 ist der oberen Luftdurchtrittsöffnung 7 in Stromrichtung der eintretenden Luft vorgeschaltet. Der obere Filterkasten 71 ist zum Erdboden hin nach unten öffnenbar. In die Filterkästen 71, 72 sind Filterkassetten 21 eingelassen. Die Filterkassetten 21 sind über einen nach unten öffnenbaren Deckel in Griffhöhe oberhalb eines Podestes der Treppe 8 vorgesehen. Der Deckel mit den Filterkassetten 21 kann nach unten hin vom Monteur somit sicher aufgeklappt werden und die Filterkassetten 21 können ggf. ausgetauscht oder gereinigt werden.

Der untere Filterkasten 72 ist in Stromrichtung der unteren Luftdurchtrittsöffnung 6 ebenfalls vorgeschaltet und unterhalb des Podestes der Treppe 8 angeordnet Auch der untere Filterkasten 72 ist mit einem Klappmechanismus für die unteren Filterkassetten 21 ausgestattet, der es gestattet, die Filterkassetten 21 sicher nach unten hin mittels des Deckels aufzuklappen und auszutauschen bzw. zu reinigen.

Die durch die untere Luftdurchtrittsöffnung 6 eintretende durch den unteren Filterkasten 72 gereinigte Luft wird mittels eines Ventilators 15 durch den Luftkanal 10 in den Innenraum des Turmes 2 gesaugt und streicht dabei an den elektrischen Einrichtungen 22, bspw. einen Transformator, vorbei und kühlt diese. Die Abwärme aufnehmende Luft wird durch den in diesem Beispiel oberhalb eines Zwischenbodens angeordneten Ventilator 15 durch den weiteren Luftkanal 14 abgesaugt und aus der Luftaustrittsöffnung 16 nach außen geblasen.

Die durch die obere Luftdurchtrittsöffnung 7 tretende und durch den oberen. Luftfilterkasten 71 gefilterte Luft strömt durch den weiteren Luftkanal 74, durch einen Ventilator 25 befördert, an der elektrischen Einrichtung 9 vorbei. Der Aufbau entspricht dabei grundsätzlich dem in Fig. 3 gezeigten Aufbau. Allerdings ist dort kein Filter mit Filterkasten im Innenraum des Turmes 3 angeordnet, sondern ein Filterkasten 71 mit Filter 21 ist außerhalb des Turmes der oberen Luftdurchtrittsöffnung 7 vorgeschaltet.

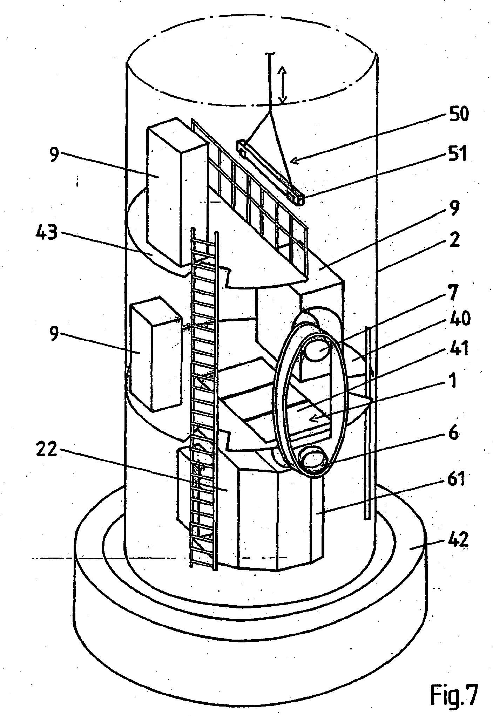

Fig. 7 zeigt den Turm 2 in einer perspektivischen Durchsicht mit herausgenommener Türzarge 3, aber mit den Luftdurchtrittsöffnungen 6, 7.

Der Transformator 22 und der Bereich 1 sind so konzipiert und in ihrer Größe aufeinander abgestimmt, dass der Transformator 22 durch den Bereich 1 bei herausgenommener Türzarge 3 in den Turm 2 eingebracht und später auch wieder ausgebracht werden kann.

Der Transformator 22 kann durch die erfindungsgemäße gezielte Belüftung, wie sie beispielsweise in Fig. 5 dargestellt ist, kleiner konzipiert werden als üblich, und zwar so klein, dass er nach dem Herausnehmen der lösbaren Türzarge 3 durch den Bereich 1 hindurch passt. Die gezielte Belüftung wird durch die erfindungsgemäße Türzarge 3 und deren Luftdurchtrittsöffnungen 6, 7, mögliche Luftführung und/oder durch das Luft führende Transformatorgehäuse 61 erreicht. Das Transformatorgehäuse 61 kann für den Transport des Transformators 22 abgebaut und vorzugsweise zerlegt werden, so dass auch dessen Teile durch den Bereich 1 passen.

Der Transformator 22 kann durch einen Zwischenboden 40 gemäß Fig. 7 im Turm 2 gehoben oder gesenkt werden. In den Zwischenboden 40 können dafür eine Ladeklappe oder aufnehmbare Laufplatten 41 eingelassen sein, um geöffnet zu werden. Das Anheben des Transformators 22 geschieht mit einem Hebezeug 50, das vorzugsweise von einem (nicht dargestellten) Flansch des untersten Turmsegments des Turmes 2 im Innern des Turms 2 abgehängt werden kann. Alternativ können auch in der Turmwandung Befestigungspunkte zum Anschlagen des Hebezeugs 50 vorgesehen sein.

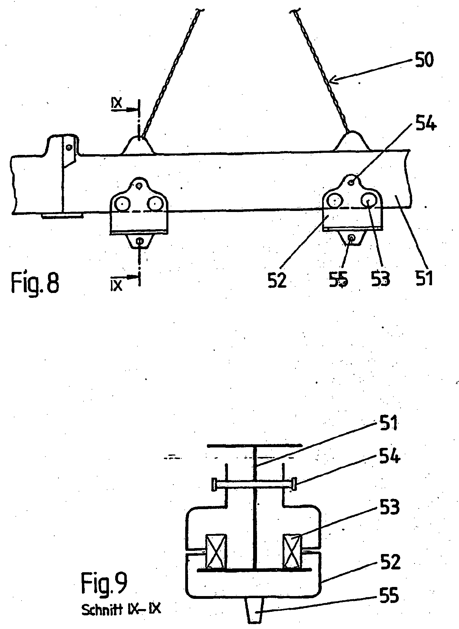

Der Transformator 22 wird bevorzugt an einem waagerechten Lastbalken 51 des Hebezeugs 50 gemäß Fig. 8 angeschraubt oder angelascht. Die Laschen 52 können mit Laufrollen 53 nach Art einer Laufkatze ausgerüstet sein, um ein waagerechtes Verschieben des am Lastbalken 51 hängenden Transformators 22 am Lastbalken 51 entlang zu ermöglichen.

Dabei können die Laufrollen 53 zum Beispiel in einer Doppel-T-Form des Lastbalkens 51 laufen, wie Fig. 9 zeigt. Während des Anhebens oder Absenkens des am Lastbalken 51 angehängten Transformators 22 sind die Laschen 52 mittels Fixierungsbolzen 54 am Lastbalken 51 gegen Verrutschen gesichert. Der Transformator 22 ist durch an den Laschen 52 angeordnete Ösen 55 an den Laschen 52 für die Montage befestigbar.

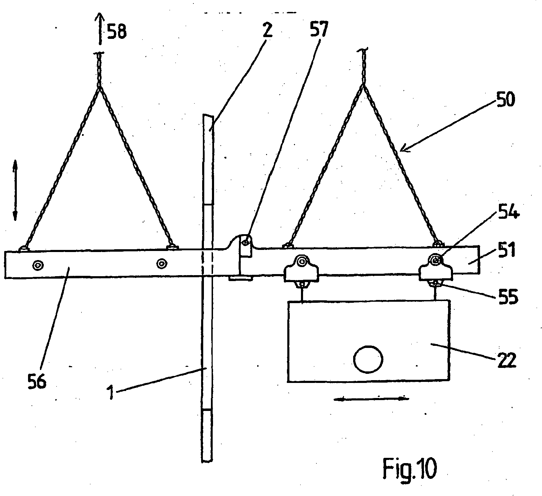

Der Lastbalken 51 kann, wie in Fig. 10 schematisch dargestellt, durch die Türöffnung 1 hindurch zu einer Lastbrücke nach außen verlängert werden, damit der Transformator 22 aus dem Turm 2 hinaus oder in den Turm 2 hinein verschoben werden kann. Das äußere Ende der Lastbrücke kann außerhalb des Turms 2 zum Beispiel mit einer Stütze auf dem Boden abgestützt werden oder mit Hilfe eines (nicht eingezeichneten) Kranes 58 in richtiger Höhe schwebend gehalten werden. Die Lastbrücke umfasst den im Inneren des Turmes 2 vorgesehenen Lastbalken 51 und einen außerhalb des Turmes vorgesehenen Lastbalken 56. Der im Turm 2 vorgesehene Lastbalken 51 und der außerhalb des Turmes 2 vorgesehene Lastbalken 56 sind zum Verschieben des Transformators 22 mittels der Laschen 52 entlang der Lastbrücke temporär positionsfest miteinander durch ein Verbindungsbauteil 57 verbindbar und bilden durch ihre feste Verbindung die Lastbrücke aus.

Der Transformator 22, seine Gehäuseteile und auch zusätzliche elektrische Einrichtungen 9 in Fig. 7 können bei aufgenommen Laufplatten 41 durch den Zwischenboden 40 gehoben oder gesenkt werden. Insbesondere ist es auch möglich, den Transformator 22 und die elektrischen Einrichtungen 9 erst einmal auf einer Fundamentplatte 42 des Turmes 2 abzusetzen und anschließend die elektrischen Einrichtungen 9, zum Beispiel mit dem Wachsen des Turmes 2 bei seinem Aufbau durch den Zwischenboden 40, auf das Zwischenbodenniveau oder ein höheres Niveau zu heben. Wenigstens ein Zwischenboden 40 im Turm 2 kann insbesondere auch als Teilboden 43 bzw. Empore ausgebildet sein, um im inneren des Turmes 2 einen lotrechten Weg an diesem Teilboden 43 vorbei zu erlauben.

## Patentansprüche

1. Turm einer Windenergieanlage mit
einer Tür zum Betreten des Turminneren, umfassend
eine Türzarge (3),
die eine, vorzugsweise mit einem Türblatt (5) zu schließende Türöffnung aufweist,
und einem Transformator (22),
wobei die Türzarge (3) wenigstens eine Luftdurchtrittsöffnung (6, 7), insbesondere Lufteintrittsöffnung zur Kühlung des im Fuß des Turmes (2) angeordneten elektrischen Transformators (22) aufweist,
**dadurch gekennzeichnet, dass**
eine Außenkontur der Türzarge (3) einen Bereich (1) in einer Wandung des Turmes (2) ausbildet und
die Türzarge (3) lösbar ist und
der Transformator (22) und der Bereich (1) so konzipiert und in ihrer Größe aufeinander abgestimmt sind, dass der Transformator (22) durch den Bereich (1) nur bei herausgenommener Türzarge (3) in den Turm (2) einbringbar und später ausbringbar ist.

2. Turm nach Anspruch 1,
**dadurch gekennzeichnet, dass** die Luftdurchtrittsöffnung (6, 7) unterhalb der Türöffnung (4) angeordnet ist.

3. Turm nach Anspruch 1 oder 2,
**dadurch gekennzeichnet, dass** die Türzarge (3) eine im Wesentlichen ovale Außenkontur aufweist und die Türöffnung (4) im Wesentlichen rechteckig ist.

4. Turm nach einem der vorhergehenden Ansprüche,
**dadurch gekennzeichnet, dass** zum Austritt von Luft wenigstens eine Absaugeinrichtung (15) vorgesehen ist.

5. Turm nach einem der vorhergehenden Ansprüche mit einer zum Betreten des Turminneren vorgesehenen Tür und mit einer zu der Tür führenden Treppe (8) an der Außenseite des Turms,
**dadurch gekennzeichnet,**
**dass** wenigstens eine Einrichtung zur Filterung (21) von Luft unter der Treppe (8) angeordnet ist.

6. Turm nach einem der vorhergehenden Ansprüche, **dadurch gekennzeichnet, dass** zur Temperierung einer, vorzugsweise oberhalb des Türniveaus im Turminneren anzuordnenden, zu temperierenden Einrichtung die Türzarge (3) wenigstens eine Luftdurchtrittsöffnung (6, 7) oberhalb der Türöffnung (4) aufweist.

7. Turm nach Anspruch 6,
**dadurch gekennzeichnet, dass** der oberhalb der Türöffnung (4) angeordneten Luftdurchtrittsöffnung (6, 7) wenigstens eine Filtereinrichtung im Turminneren nachgeschaltet ist.

8. Türzarge einer Tür eines Turmes gemäß einem der vorhergehenden Ansprüche 1 bis 7 einer Windenergieanlage,
die eine, vorzugsweise mit einem Türblatt zu schließende Türöffnung aufweist, mit wenigstens einer Luftdurchtrittsöffnung (6, 7) zur Kühlung eines im Fuß des Turmes (2) angeordneten Transformators (22), wobei eine Außenkontur der Türzarge (3) einen Bereich (1) in einer Wandung der Turmes (2) ausbildet, **dadurch gekennzeichnet, dass**
die Türzarge (3) lösbar ist und
der Transformator (22) und der Bereich (1) so konzipiert sind und in ihrer Größe aufeinander abgestimmt sind, dass der Transformator (22) durch den Bereich (1) nur bei herausgenommener Türzarge (2) in den Turm (2) einbringbar und später ausbringbar ist.

9. Türzarge nach Anspruch 8,
**dadurch gekennzeichnet, dass** die Luftdurchtrittsöffnung (6, 7) unterhalb der Türöffnung (4) angeordnet ist.

10. Türzarge nach Anspruch 8 oder 9,
**dadurch gekennzeichnet, dass** die Türzarge (3) eine im Wesentlichen ovale Außenkontur aufweist und die Türöffnung (4) im Wesentlichen rechteckig ist.

11. Windenergieanlage mit einem Turm gemäß einem der Ansprüche 1 bis 7, mit einer zum Betreten des Turminneren vorgesehenen Tür und mit einer zu der Tür führenden Treppe (8) an der Außenseite des Turms,
**dadurch gekennzeichnet,**
**dass** wenigstens eine Einrichtung zur Filterung (21) von Luft unter der Treppe (8) angeordnet ist.

12. Windenergieanlage nach Anspruch 11,
**dadurch gekennzeichnet, dass** die Filtereinrichtung (21) einer unterhalb der Türöffnung (4) angeordneten Luftdurchtrittsöffnung (6, 7) vorgeschaltet ist.

13. Windenergieanlage nach Anspruch 12,
**dadurch gekennzeichnet, dass** der durch die Filtereinrichtung (21) und die Luftdurchtrittsöffnung (6, 7) gebildete Luftweg wenigstens einer elektrischen Einrichtung (9), vorzugsweise einem Umrichter und/oder einem Transformator zur Temperierung, insbesondere Kühlung, zugeordnet ist.

14. Windenergieanlage nach einem der Ansprüche 11 bis 13,
**dadurch gekennzeichnet, dass** zur Temperierung einer, vorzugsweise oberhalb des Türniveaus im Turminneren anzuordnenden, zu temperierenden Einrichtung die Türzarge (3) wenigstens eine Luftdurchtrittsöffnung (6, 7) oberhalb der Türöffnung (4) aufweist.

## Claims

1. Tower of a wind power installation with a
door for entering the interior of the tower, comprising a door frame (3) comprising a door opening preferably to be closed with a door leaf (5) and a transformer (22)
wherein the door frame (3) comprises at least one air passage opening (6, 7) in particular an air entrance opening for cooling the transformer (22) provided in the foot of the tower (2),
**characterized in that** the outer contour of the door frame (3) forms an area (1) in a wall of the tower (2)
and the door frame (3) is detachable
and the transformer (22) and the area (1) are designed and coordinated in their size with one another in such a manner that the transformer (22) can be introduced through the area (1) into the tower (2) and also removed later, only when the door frame (3) is removed.

2. Tower according to claim 1,
**characterized in that** the air passage opening (6, 7) is arranged below the door opening (4).

3. Tower according to claim 1 or 2,
**characterized in that** the door frame (3) has a substantially oval outside contour and that the door opening (4) is substantially rectangular.

4. Tower according to one of the previous claims,
**characterized in that** at least one suction apparatus (15) is provided for the emission of air.

5. Tower according to one of the previous claims with a door provided for entering the tower interior and with stairs (8) leading to the door on the outside of the tower, **characterized in that**
at least one apparatus for filtering (21) air is arranged under the stairs (8).

6. Tower according to one of the previous claims,
**characterized in that** the door frame (3) comprises at least one air passage opening (6, 7) above the door opening (4) for tempering an apparatus to be tempered and to be arranged preferably above the door level inside the tower.

7. Tower according to claim 6,
**characterized in that** at least one filter apparatus inside the tower is connected after the air passage opening (6, 7) arranged above the door opening (4).

8. Door frame for a door of a tower according to one of the previous claims 1 - 7 of a wind power installation comprising a door opening, which is preferably closable with a door leaf,
with at least one air passage opening (6, 7) for cooling a transformer (22) provided in the foot of the tower (2),
wherein an outer contour of the door frame (3) forms an area (1) in a wall of the tower (2),
**characterized in that** the door frame (3) is detachable
and the transformer (22) and the area (1) are designed and coordinated in their size with one another in such a manner that the transformer (22) can be introduced through the area (1) into the tower (2) and also removed later, only when the door frame (3) is removed.

9. Door frame according to claim 8,
**characterized in that** the air passage opening (6, 7) is arranged under the door opening (4).

10. Door frame according to claim 8 or 9, **characterized in that** the door frame (3) has a substantially oval outer contour and that the door opening (4) is substantially rectangular.

11. Wind power installation with a tower according to one of the claims 1 to 7 with a door provided for entering the tower interior and with stairs (8) leading to the door on the outside of the tower, **characterized in that** at least one apparatus for the filtering (21) of air is arranged under the stairs (8).

12. Wind power installation according to claim 11,
**characterized in that** the filter apparatus (21) is connected in front of an air passage opening arranged under the door opening (4).

13. Wind power installation according to claim 12,
**characterized in that** the air path formed through the filter apparatus (21) and the air passage opening (6,7) is associated with at least one electrical apparatus (9), preferably a converter and/or a transformer for tempering, especially cooling.

14. Wind power installation according to claim 11 to 13, **characterized in that** the door frame (3) comprises at least one air passage opening (6, 7) above the door opening (4) for tempering an apparatus to be tempered and to be arranged preferably above the door level inside the tower.

## Revendications

1. Tour d'éolienne, munie d'une porte pour pénétrer à l'intérieur de la tour, comprenant
un dormant de porte (3) qui présente une baie de porte fermée de préférence par un vantail de porte (5) et un transformateur (22),
le dormant de porte (3) présentant au moins une ouverture de passage d'air (6, 7), en particulier une ouverture d'entrée d'air pour refroidir le transformateur (22) disposée dans le socle de la tour (2),
**caractérisée en ce qu'**un contour extérieur du dormant de porte (3) délimite une zone (1) dans une paroi de la tour (2)
et le dormant de porte (3) est démontable
et le transformateur (22) et la zone (1) sont conçues et adaptées mutuellement en termes de dimensions de manière telle que le transformateur (22) puisse être introduite et, ultérieurement, retirée de la tour (2) en passant par la zone (1), uniquement lorsque le dormant de porte (3) est démonté.

2. Tour selon la revendication 1,
**caractérisée en ce que** l'ouverture de passage d'air (6, 7) est disposée au dessous de la baie de porte (4).

3. Tour selon la revendication 1 ou 2,
**caractérisée en ce que** le dormant de porte (3) présente un contour extérieur sensiblement ovale et la baie de porte (4) a une forme sensiblement rectangulaire.

4. Tour selon une des revendications précédentes,
**caractérisée en ce que** pour la sortie de l'air, il est prévu au moins un dispositif d'aspiration (15).

5. Tour selon une des revendications précédentes, munie d'une porte pour pénétrer à l'intérieur de la tour et d'un escalier (8) menant à la porte et situé à l'extérieur de la tour,
**caractérisée en ce qu'**au moins un dispositif de filtrage (21) d'air est installé sous l'escalier (8).

6. Tour selon une des revendications précédentes,
**caractérisée en ce que** pour équilibrer la température d'une installation à équilibrer, disposée de préférence au-dessus du niveau de la porte, à l'intérieur de la tour, le dormant de porte (3) présente au moins une ouverture de passage d'air (6, 7) au-dessus de la baie de porte (4).

7. Tour selon la revendication 6,
**caractérisée en ce qu'**au moins un dispositif de filtrage, situé à l'intérieur de la tour, est placé en aval de l'ouverture de passage d'air (6, 7) disposée au-dessus de la baie de porte (4).

8. Dormant pour une porte d'une tour d'éolienne selon une des revendications précédentes 1 à 7, qui présente une baie de porte fermée de préférence par un vantail de porte,
comprenant au moins une ouverture de passage d'air (6, 7) pour refroidir un transformateur (22) disposée dans le socle de la tour (2),
un contour extérieur du dormant de porte (3) délimitant une zone (1) dans une paroi de la tour (2),
**caractérisé en ce que** le dormant de porte (3) est démontable et le transformateur (22) et la zone (1) sont conçues et adaptées mutuellement en termes de dimensions de manière telle que le transformateur (22) puisse être introduite et, ultérieurement, retirée de la tour (2) en passant par la zone (1), uniquement lorsque le dormant de porte (3) est démonté.

9. Dormant de porte selon la revendication 8,
**caractérisé en ce que** l'ouverture de passage d'air (6, 7) est disposée au dessous de la baie de porte (4).

10. Dormant de porte selon la revendication 8 ou 9,
**caractérisé en ce que** le dormant de porte (3) présente un contour extérieur sensiblement ovale et la baie de porte (4) a une forme sensiblement rectangulaire.

11. Eolienne comprenant une tour selon une des revendications 1 à 7, munie d'une porte pour pénétrer à l'intérieur de la tour et d'un escalier (8) menant à la porte et situé à l'extérieur de la tour,
**caractérisée en ce qu'**au moins un dispositif de filtrage (21) d'air est installé sous l'escalier (8).

12. Eolienne selon la revendication 11,
**caractérisée en ce que** le dispositif de filtrage (21) est installé en amont d'une ouverture de passage d'air (6, 7) disposée au-dessous de la baie de porte (4).

13. Eolienne selon la revendication 12,
**caractérisée en ce que** le passage d'air formé par le dispositif de filtrage (21) et l'ouverture de passage d'air (6, 7) est associé à au moins une installation électrique (9), de préférence à un convertisseur et/ou un transformateur, afin d'opérer un équilibrage de la température, notamment un refroidissement.

14. Eolienne selon une des revendications 11 à 13,
**caractérisée en ce que** pour l'équilibrage de la température d'un dispositif à équilibrer, installé de préférence au-dessus du niveau de la porte, à l'intérieur de la tour, le dormant de porte (3) présente au moins une ouverture de passage d'air (6, 7) au-dessus de la baie de porte (4).
